# EUROPÄISCHE PATENTANMELDUNG

(11) **EP 4 726 164 A1**
(43) Veröffentlichungstag der Anmeldung: **15.04.2026**
(21) Anmeldenummer: 25207150.1
(22) Anmeldetag: 07.10.2025
(51) Int. Cl.: E06B 7/36, B23D 51/02

(54) **VORRICHTUNG ZUM FÜHREN EINES SÄGEBLATTS BEIM SÄGEN EINES FINGERSCHUTZPROFILS, ANORDNUNG UND TÜR**

(30) Priorität: 10.10.2024 DE 202024105832 U
(71) Anmelder: Athmer OHG, 59757 Arnsberg (DE)
(72) Erfinder: Heckmann, Andre, 59759 Arnsberg (DE)
(74) Vertreter: Fritz Patent- und Rechtsanwälte PartmbB

(57) **Zusammenfassung**

Die vorliegende Erfindung betrifft eine Vorrichtung zum Führen eines Sägeblattes beim Sägen eines Fingerschutzprofils, zumindest umfassend ein Gehäuse, wobei das Gehäuse durch zwei parallel zueinander verlaufende Stege und einen die Stege verbindenden Boden gebildet ist, wobei das Gehäuse eine Ausnehmung aufweist, mindestens ein Mittel zum Führen des Sägeblattes in einer vorbestimmten Position relativ zu einer Profilkante des Fingerschutzprofils, wobei das mindestens eine Mittel in den Stegen und dem Boden angeordnet ist, wobei die Ausnehmung geeignet und eingerichtet ist, das Fingerschutzprofil einzuklemmen.

## Beschreibung

Die vorliegende Erfindung betrifft eine Vorrichtung zum Führen eines Sägeblattes beim Sägen eines Fingerschutzprofils, zumindest umfassend ein Gehäuse mit einem Querschnitt, wobei der durch zwei parallel zueinander verlaufende Stege und einen die Stege verbindenden Boden gebildet ist, wobei das Gehäuse eine Ausnehmung aufweist, mindestens ein Mittel zum Führen des Sägeblattes in einer vorbestimmten Position relativ zu einer Profilkante des Fingerschutzprofils, wobei das mindestens eine Mittel in den Stegen und dem Boden angeordnet ist.

Zum Schutz vor Verletzungen, insbesondere zum Schutz vor Einklemmungen von Händen und Fingern, werden Türen zunehmend mit Fingerschutzsystemen ausgestattet. Diese Fingerschutzsysteme decken einen Spalt zwischen Türzarge und Türblatt an der Nebenschließkante einer Tür ab, um ein unbeabsichtigtes Eindringen von Händen und Fingern zu verhindern. Dies ist insbesondere in öffentlichen Einrichtungen, wie Kindergärten und Schulen, erforderlich.

An der Bandseite einer Tür erschweren die Türbänder ein Anbringen des Fingerschutzes, da die Türbänder häufig zwischen Türzarge und Türblatt hervorstehen und dadurch ein durchgehendes Anbringen eines Fingerschutzes nur schwer möglich ist.

Neben dem Sicherheitsaspekt spielt auch das Aussehen des Fingerschutzsystems eine bedeutende Rolle. So sind Fingerschutzsysteme unerwünscht, die durch ihre Größe und Gestaltung ins Auge fallen.

Wünschenswert sind hingegen Fingerschutzsysteme, die aus einem Profil bestehen, was sich in die optische Gestaltung der Tür einfügt und beispielsweise die Form der Türbänder über die Gesamtlänge der Tür aufgreift.

Bei der Montage von Fingerschutzprofilen, insbesondere bei der Montage optisch angepasster Fingerschutzprofile ist es trotzdem notwendig, dass die Fingerschutzprofile den gesamten Spalt zwischen Türzarge und Türblatt sicher abdecken. Wird bei dem Anbringen das Fingerschutzprofil in mehrere Teile unterteilt, um die hervorstehenden Türbänder auszusparen, ist es erforderlich, dass das Fingerschutzprofil mit einer hohen Genauigkeit auf die erforderliche Länge gebracht wird. Dies ist insbesondere schwierig, wenn das Fingerschutzprofil im eingebauten Zustand der Tür angebracht werden muss.

Hier setzt die Erfindung an.

Es ist die Aufgabe der vorliegenden Erfindung ein Hilfsmittel vorzuschlagen, mit dem eine genaue Abmessung der erforderlichen Länge eines Fingerschutzprofils vorgenommen werden kann, ohne dass es Messunsicherheiten oder Übertragungsfehler gibt.

Die Aufgabe wird durch eine Vorrichtung zum Führen eines Sägeblattes beim Sägen eines Fingerschutzprofils gelöst, zumindest umfassend ein Gehäuse mit einem Querschnitt, wobei der durch zwei parallel zueinander verlaufende Stege und einen die Stege verbindenden Boden gebildet ist, wobei das Gehäuse eine Ausnehmung aufweist, mindestens ein Mittel zum Führen des Sägeblattes in einer vorbestimmten Position relativ zu einer Profilkante des Fingerschutzprofils, wobei das mindestens eine Mittel in den Stegen und dem Boden angeordnet ist, wobei die Ausnehmung geeignet und eingerichtet ist, das Fingerschutzprofil einzuklemmen.

Der Vorteil der Vorrichtung besteht darin, dass das Fingerschutzprofil an der Stelle in die Vorrichtung eingeklemmt werden kann, an der es gekürzt werden soll. Die relative Position von Vorrichtung und Fingerschutzprofil zueinander ist durch die Klemmung festgelegt. Wird das Fingerschutzprofil mit der Vorrichtung nach dem Einklemmen noch bewegt, beispielsweise, um zu einer Hand- oder Kappsäge zu gelangen, bleibt die Vorrichtung an der Position an dem Fingerschutzprofil, die vorher ausgewählt wurde. Die Aussparung, wird durch die beiden Stege und den Boden gebildet. Hierbei sind die beiden Stege und der Boden so ausgeformt, beispielsweise durch Ausformungen und Einbuchtungen, dass die resultierende Aussparung so ausgeformt ist, dass das Fingerschutzprofil leicht in die Aussparung eingeklemmt werden kann.

Ein weiterer Vorteil der Vorrichtung besteht darin, dass die Vorrichtung Mittel zum Führen des Sägeblattes in einer vorbestimmten Position relativ zu einer Profilkante des Fingerschutzprofils aufweist. Durch die Mittel zum Führen wird das Sägeblatt beim Sägen in eine gewünschte Richtung geführt. Der Sägeschnitt bekommt daher eine relativ zur Profilkante des Fingerschutzprofils definierte Position.

Hierbei kann es vorgesehen sein, dass das mindestens eine Mittel zum Führen des Sägeblattes im Zusammenspiel mit dem Gehäuse einen vertikalen Sägewinkel von 90° in Bezug zu mindestens einer Profilkante einer Längsrichtung des Profils definiert. Bei vielen Einbausituationen eines Fingerschutzprofils ist es erforderlich, dass das Fingerschutzprofil zum einen auf eine gewünschte Länge gekürzt wird, aber auch zum anderen, dass die Schnittkante exakt winklig zu der Längsrichtung des Fingerschutzprofils ausgeführt ist. In vielen Fällen ist der erforderliche Winkel 90°, um eine plane Stoßkante mit beispielsweise einem angrenzenden Türband zu erreichen.

Um eine exakte Abdeckung eines Spaltes zwischen der Türzarge und dem Türblatt bei einem optisch an die Tür oder das Türband angepasste Design des Fingerschutzprofils erreichen zu können, kann es eine Vielzahl unterschiedliche geformter Fingerschutzprofile geben. Um unterschiedlich geformte Fingerschutzprofile in die Vorrichtung einklemmen zu können, kann eine Anpassung der Form der Aussparung notwendig sein. Es kann daher vorgesehen sein, dass die Vorrichtung mindestens einen Adapter umfasst, wobei der Adapter eine Außenseite und eine Innenseite aufweist, wobei die Außenseite geeignet und eingerichtet ist an oder in die Ausnehmung eingebracht zu sein und wobei die Innenseite geeignet und eingerichtet ist ein zweites Fingerschutzprofil einzuklemmen.

Eine Anordnung zum Führen eines Sägeblattes beim Sägen eines Fingerschutzprofils umfasst eine erfindungsgemäße Vorrichtung und zumindest ein Fingerschutzprofil und ein Profilabschlussmittel, wobei das Profilabschlussmittel geeignet und eingerichtet ist eine Stirnseite des Fingerschutzprofils abzudecken. Als Stirnseite wird im Zusammenhang mit der Anmeldung die Seite des Profils bezeichnet, die sich an den Enden des Fingerschutzprofils erstrecken. Durch den Aufbau eines Fingerschutzprofils ist das Fingerschutzprofil üblicherweise innen hohl. An den Stirnseiten des Fingerschutzprofils, also an den beiden Enden des Fingerschutzprofils, ist daher eine Öffnung in das Innere des Fingerschutzprofils vorhanden. Dies ist im eingebauten Zustand häufig nicht erwünscht, da beispielsweise Dreck in das Fingerschutzprofil eindringen kann. Zur Abdeckung dieser Öffnung kann ein Profilabschlussmittel genutzt werden, dass die Öffnung abdeckt. Häufig ist das Profilabschlussmittel in seiner Kontur der Kontur des Fingerschutzprofils nachempfunden.

Es kann vorgesehen sein, dass die Vorrichtung an dem Fingerschutzprofil verschiebbar ist. Um die Vorrichtung an der Stelle des Fingerschutzprofils zu platzieren, an der das Fingerschutzprofil gekürzt werden soll, kann es wünschenswert sein, dass die Vorrichtung an dem Fingerschutzprofil verschiebbar ist. Es ist vorteilhaft, wenn die Vorrichtung nur durch eine äußere Krafteinwirkung verschiebbar ist und ohne äußere Krafteinwirkung so fest an dem Fingerschutzprofil klemmt, dass es sich nicht verschiebt. Dadurch werden zwei Vorteile erreicht. Der erste Vorteil ist, dass das Fingerschutzprofil zum Abmessen der erforderlichen Länge beispielsweise an die Tür, an der das Fingerschutzprofil angebracht werden soll, angehalten wird. Die Vorrichtung wird dann durch eine äußere Krafteinwirkung auf dem Fingerschutzprofil verschoben, bis die Vorrichtung sich in der Position befindet, an der das Fingerschutzprofil gekürzt werden soll. Es ist kein Messen mit einem Messmittel und kein Anzeichnen der Stelle, an der gekürzt werden soll, erforderlich. Der zweite Vorteil besteht darin, dass die Vorrichtung ohne äußere Krafteinwirkung an der Position verbleibt, wo sie sich befindet. Nach dem Abmessen der erforderlichen Länge durch das Verschieben der Vorrichtung, kann daher das Fingerschutzprofil von der Tür angenommen werden und an einen Ort gebracht werden, der sich zum Sägen besonders eignet. Dies kann beispielsweise das Gestell einer Kappsäge oder eine Werkbank bei Nutzung einer Handsäge sein. Die durch die Vorrichtung markierte Länge geht dabei nicht verloren. Es kann auch vorgesehen sein, dass die durch die Vorrichtung markierte Länge mit einem Markierungsmittel, beispielsweise einem Stift, auf das Fingerschutzprofil übertragen wird.

Weiter kann es vorgesehen sein, dass das Profilabschlussmittel einen ersten Abschnitt und einen zweiten Abschnitt aufweist, wobei der erste Abschnitt geeignet und eingerichtet ist in oder an der Stirnseite des Fingerschutzprofils befestigt zu sein und wobei der zweite Abschnitt eine Dicke aufweist, die im befestigten Zustand an dem Fingerschutzprofil die Länge des Fingerschutzprofil um die Dicke verlängert. Das Profilabschlussmittel kann beispielsweise mit dem ersten Abschnitt in das freie Innere des Fingerschutzmittels eingeschoben werden und hält so an dem Fingerschutzmittel. Der zweite Abschnitt bildet dann die Abdeckung der Stirnseite mit einer gewünschten Dicke. Die Dicke des zweiten Abschnitts muss bei der Bestimmung der Länge, auf die das Fingerschutzmittel gekürzt werden soll, berücksichtigt werden, wenn eine optimale Abdeckung des Spaltes erreicht werden soll.

Hierbei kann es insbesondere vorgesehen sein, dass das Gehäuse eine Vorderseite und eine Rückseite aufweist, wobei das Mittel zum Führen des Sägeblattes von der Vorderseite und/oder der Rückseite in einer parallelen Ebene zu der Vorderseite und/oder der Rückseite mit einem Abstand in den Stegen und dem Boden angeordnet ist, der der Dicke des Profilabschlussmittels entspricht. Als Vorderseite oder Rückseite wird im Zusammenhang mit der Anmeldung die Ebene verstanden, die von den Stegen und dem Boden aufgespannt wird. Zum Abmessen der erforderlichen Länge des Fingerschutzprofils wird die Vorrichtung auf dem Fingerschutzprofil verschoben, bis die Vorderseite oder die Rückseite der Vorrichtung an dem Punkt anliegt, auf die das Fingerschutzprofil gekürzt werden soll. Durch die Ausgestaltung der Vorrichtung wird das Fingerschutzmittel dann genau um die Dicke des zweiten Teils des Profilabschlussmittels kürzer gekürzt, als die Vorderseite oder die Rückseite der Vorrichtung angeben.

Es kann vorgesehen sein, dass die Anordnung ein Abschlussbauteil aufweist, wobei das Abschlussbauteil als spiegelsymmetrisches Profilabschlussmittel ausgeführt ist, wobei das Abschlussbauteil eine Sollbruchkante an der Symmetrieachse aufweist und jede Hälfte des Abschlussbauteils geeignet und eingerichtet ist jeweils eine der gegenüberliegenden Stirnseiten des Fingerschutzprofils abzudecken. Für die Montage des Fingerschutzmittels kann es wünschenswert sein, beide Stirnseiten des Fingerschutzprofils mit dem Profilabschlussmittel abzudecken. Zunächst ist es daher möglich, dass beide Profilabschlussmittel als ein spiegelsymmetrisches Abschlussbauteil vorhanden sind, welches bei der Montage an der Sollbruchstelle in zwei Profilabschlussmittel gebrochen werden kann. Es ist zum Abmessen der erforderlichen Länge des Fingerschutzprofils möglich, das Abschlussbauteil in eine Stirnseite des Fingerschutzprofils abzudecken.

Weiter kann es vorgesehen sein, dass der Boden der Vorrichtung eine Höhe aufweist, die der halben Höhe des Abschlussbauteils entspricht. Unter der Höhe wird im Zusammenhang der Anmeldung die Abmessung verstanden, die der Boden zwischen seiner Außenkante und der Aussparung aufweist. Das Zusammenspiel des Abschlussbauteils an einer Stirnseite des Fingerschutzprofils und der eingeklemmten Vorrichtung führt durch die angepassten Abmessungen dazu, dass das Fingerschutzprofil auf dem Abschlussbauteil und der Vorrichtung abgelegt werden kann. Dies bietet eine horizontale Lage des Fingerschutzprofils beispielsweise beim Sägen. Durch die horizontale Lage des Fingerschutzprofils wird das Mittel zum Führen eines Sägeblattes unterstützt, um einen vertikalen Schnitt in einem definierten Winkel zu erreichen.

Tür aufweisend zumindest eine Anordnung nach einem der vorhergehenden Ansprüche und mindestens ein Türband, wobei die Anordnung geeignet und eingerichtet ist, den Abstand zwischen einem Untergrund oder einer Decke und dem mindestens einen Türband oder zwischen zwei Türbändern abzunehmen.

Ein Verfahren zum Führen eines Sägeblattes beim Sägen eines Fingerschutzprofils, umfasst wenigstens die nachfolgenden Schritte:
- das Fingerschutzprofil wird in die Ausnehmung der Vorrichtung eingeklemmt,
- das Abschlussbauteil wird an einer Stirnseite des Fingerschutzprofils angebracht,
- das Fingerschutzprofil wird mit dem freien Ende des Abschlussbauteils an eine Seite des ersten Türbands oder an einen Untergrund oder an einer Türzarge gehalten,
- die Vorrichtung wird auf dem Fingerschutzprofil verschoben, bis die Vorrichtung an einem zweiten Türband oder einem Untergrund oder einer Türzarge anschlägt,
- das Sägeblatt einer Säge wird in das mindestens eine Mittel zum Führen eines Sägeblatts eingebracht
- das Fingerschutzprofil wird mittels Bewegung des Sägeblatts gekürzt.

Das Fingerschutzprofil ist nach dem Kürzen genau um die Dicke des Abschlussprofils kürzer als die gemessene Länge. Das Abschlussbauteil wird an der Sollbruchstelle in zwei Teile geteilt und an jeder Stirnseite des Fingerschutzprofils angebracht. Das Fingerschutzprofil mit angebrachten Abschlussprofilen weist dann genau die Länge zwischen dem Untergrund und dem ersten Türband oder zwischen dem ersten und dem zweiten Türband oder zwischen dem zweiten Türband und der Türzarge auf.

Weitere Merkmale und Vorteile von Ausführungsbeispielen der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:
- Fig. 1: eine perspektivische Ansicht einer erfindungsgemäßen Vorrichtung
- Fig. 2: einen perspektivischen Ausschnitt einer Türzarge und eines Türblatts mit zwei Türbändern
- Fig. 3: eine perspektivische Ansicht einer Ausführungsform der Anordnung
- Fig. 4: den Ausschnitt aus Fig. 2 mit einer Ausführungsform der Anordnung
- Fig. 5: den Ausschnitt aus Fig. 2 mit einer Ausführungsform der Anordnung in einer anderen Position
- Fig. 6: einen Ausschnitt einer perspektivischen Ansicht einer Ausführungsform der Anordnung mit einer Handsäge

Es ist nicht notwendig, dass eine erfindungsgemäße Vorrichtung alle nachfolgend beschriebenen Merkmale aufweist. Es ist auch möglich, dass eine erfindungsgemäße Vorrichtung nur einzelne Merkmale der nachfolgend beschriebenen Ausführungsbeispiels aufweist.

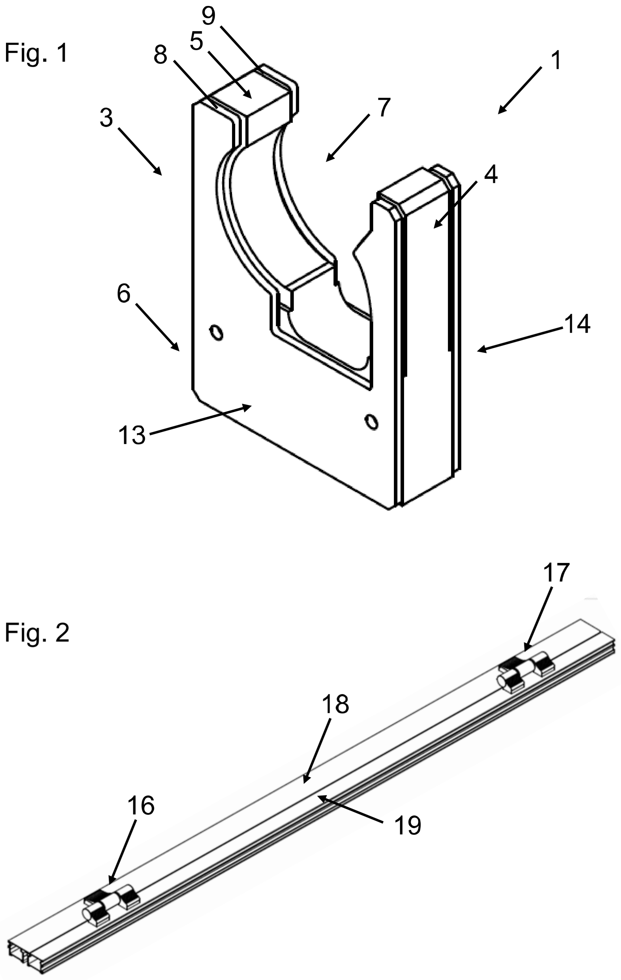

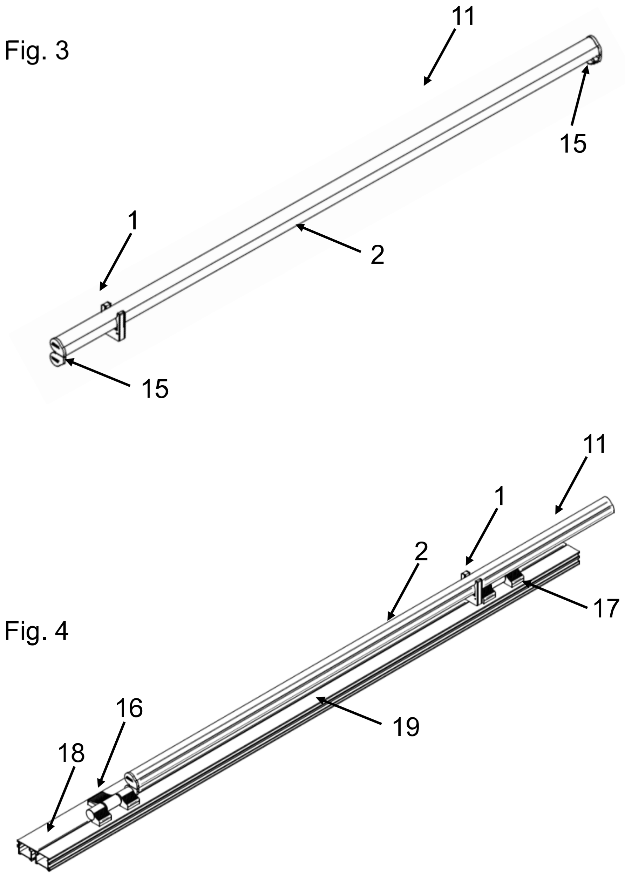

In Fig. 1 ist eine Vorrichtung 1 zum Führen eines Sägeblattes beim Sägen eines Fingerschutzprofils 2 gezeigt. Die Vorrichtung 1 umfasst ein Gehäuse 3 mit zwei parallel zueinander verlaufenden Stegen 4, 5 und einem die Stege verbindenden Boden 6. Das Gehäuse 3 weist eine Ausnehmung 7 auf und zwei Mittel 8, 9 zum Führen des Sägeblattes in einer vorbestimmten Position relativ zu einer Profilkante des Fingerschutzprofils 2. Die beiden Mittel 8, 9 sind in den Stegen 4, 5 und dem Boden 6 angeordnet und jeweils als Schlitz ausgeführt, in den das Sägeblatt einer Säge eingeführt werden kann. Das Mittel 4 ,5 zum Führen eines Sägeblattes ist so angeordnet, dass es die beiden Stege 4 ,5 vollständig aufschlitzt und teilweise in den Boden 6 hineinragt. Die Ausnehmung 7 ist derart ausgeformt, dass das Fingerschutzprofil 2 eingeklemmt werden kann. Hierzu kann das Fingerschutzprofil 2, wie in den Fig. 3, 4, 5 und 6 durch die Öffnung an einer Oberseite der Vorrichtung 1 in die Ausnehmung 7 eingebracht werden. Es kann erforderlich sein, dass das Fingerschutzprofil 2 zunächst um eine gedachte Mittellinie der Längsrichtung des Fingerschutzprofils 2 gedreht wird und zum Einklemmen die Drehung wieder rückgängig gemacht wird. Als Längsrichtung wird die längste Ausdehnung des Fingerschutzprofils 2 verstanden. Diese ist, wie bei Profilen üblich, groß gegenüber der Ausdehnung in die anderen Raumrichtungen.

Fig. 2 zeigt einen Ausschnitt einer Türzarge 19 und eines Türblattes 18 an denen zwei Türbänder 16, 17 angebracht sind. Am Beispiel dieser Art von Türbändern 16, 17 wird die Vorrichtung 1 näher erläutert. Die Vorrichtung 1 ist durch die nicht näher dargestellten Adapter 10 auch für andere Türbänder nutzbar. Um einen Spalt zwischen der Türzarge 19 und dem Türblatt 18 abdecken zu können, ist es erforderlich das Fingerschutzprofil 2 bis auf wenige Millimeter genau, vorzugsweise auf weniger als 4mm genau, zu kürzen. Diese hohe Genauigkeit kann mit einem üblichen Messmittel nur schwer erreicht werden. Es besteht zudem die Gefahr von Übertragungsfehlern, wenn die mit dem Messmittel gemessene Länge an dem Fingerschutzprofil 2 angezeichnet wird.

In Fig. 3 ist eine perspektivische Ansicht einer Ausführungsform der Anordnung gezeigt. Das Fingerschutzprofil 2 ist in die Vorrichtung 1 eingeklemmt und die Stirnseiten des Fingerschutzprofils sind mit Abschlussbauteilen 15 abgedeckt. Für die Nutzung der Vorrichtung 1 ist es ausreichend, wenn nur eine Stirnseite des Fingerschutzprofils 2 mit einem Abschlussbauteil 15 abgedeckt wird. In Fig. 3 ist erkennbar, dass durch die angepasste Kontur des Abschlussbauteils 15, das sich spiegelsymmetrisch aus zwei Profilabschlussmitteln 12 mit einer Sollbruchkante an der Symmetrieachse zusammensetzt, und der Höhe des Bodens 6 der Vorrichtung 1 eine ebene Ablagemöglichkeit für das Fingerschutzprofil 2 ergibt. Dies kann sowohl für das spätere Kürzen des Fingerschutzprofils 2 als auch für das Abmessen der erforderlichen Länge des Fingerschutzprofils 2 genutzt werden.

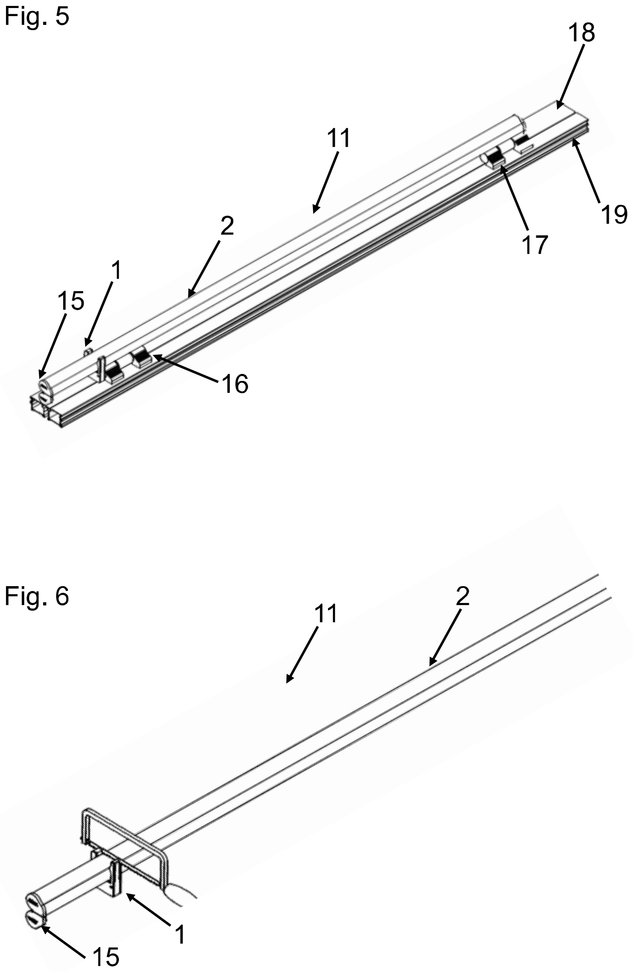

Durch die Nutzung der Vorrichtung 1 werden die beschriebenen Nachteile beim Abmessen und Übertragen der erforderlichen Länge überwunden. Hierzu zeigen die Fig. 4 und 5 eine mögliche Handhabung der Vorrichtung 1.

In der Fig. 4 wird das Abmessen der erforderlichen Länge des Fingerschutzprofils 2 zwischen zwei Türbändern 16, 17 und in Fig. 5 wird das Abmessen der erforderlichen Länge des Fingerschutzprofils 2 zwischen einem Untergrund und einem ersten Türband 16 gezeigt. Nach dem gleichen Prinzip kann ein Abmessen zwischen dem zweiten Türband 17 und einem Türrahmen erfolgen.

Es kann zum Abmessen der erforderlichen Länge des Fingerschutzprofils 2 folgendermaßen vorgegangen werden:
- das Fingerschutzprofil 2 wird in die Ausnehmung der Vorrichtung 1 eingeklemmt,
- das Abschlussbauteil 15 wird an einer Stirnseite des Fingerschutzprofils 2 angebracht,
- das Fingerschutzprofil 2 wird mit dem freien Ende des Abschlussbauteils 15 an eine Seite des ersten Türbands 16 oder an einen Untergrund oder an einer Türzarge 19 gehalten,
- die Vorrichtung 1 wird auf dem Fingerschutzprofil 2 verschoben, vorzugsweise durch eine äußere Krafteinwirkung verschoben, bis die Vorrichtung 1 an einem zweiten Türband 17 oder einem Untergrund oder einer Türzarge 19 anschlägt,
- das Sägeblatt einer Säge wird in das mindestens eine Mittel 8, 9 zum Führen eines Sägeblatts eingebracht,
- das Fingerschutzprofil 2 wird mittels Bewegung des Sägeblatts gekürzt.

Es ist ebenfalls ohne Weiteres vorgesehen, dass mehrere, beispielsweise zwei Vorrichtungen an das Fingerschutzprofil geklemmt werden. Die Vorrichtungen können dann an unterschiedliche Positionen an dem Fingerschutzprofil verschoben werden. Auch dies geschieht durch eine äußere Krafteinwirkung.

In Fig. 6 ist ein Ausschnitt einer perspektivischen Ansicht einer Ausführungsform der Anordnung mit einer Handsäge gezeigt. Die Position der Vorrichtung 1 an dem Fingerschutzprofil 2 in Fig. 6 entspricht der Position der Vorrichtung 1 aus Fig. 5. Die Vorrichtung 1 wurde in Fig. 5 so weit verschoben, bis die Vorrichtung 1 an eine Unterkante des ersten Türbands 16 anschlägt. Durch die Verschiebung der Vorrichtung 1 bis an die Unterkante des Türbands 16 ist die erforderliche Länge des Fingerschutzprofils 2 bestimmt. In Fig. 4 ist nach dem gleichen Prinzip die erforderliche Länge des Fingerschutzprofils 2 zwischen den beiden Türbändern 16, 17 bestimmt. Da sich die Vorrichtung 1 an dem Fingerschutzprofil 2 nur durch eine äußere Krafteinwirkung verschieben lässt, bleibt die Vorrichtung 1 an der ausgewählten Position, wenn das Fingerschutzprofil 2 zu einem Sägeplatz transportiert wird. Dort kann es auf dem Abschlussbauteil 15 und dem Boden 6 der Vorrichtung 1 abgestellt und entweder wie in Fig. 6 dargestellt mit einer Handsäge oder beispielsweise mit einer Kappsäge gekürzt werden. Die Säge wird in das Mittel 8, 9 zum Führen eines Sägeblatts eingeführt, dass dem Anschlagpunkt, beispielsweise dem Türband zugewandt ist. Durch die Konstruktion der Vorrichtung 1 wird das Fingerschutzprofil 2 genau um die Dicke des zweiten Abschnitts des Profilabschlussmittels 12 kürzer gekürzt als die Vorder- bzw. Rückseite 13, 14 der Vorrichtung 1 anzeigen. Dies ist von Vorteil, da die Stirnseite des Fingerschutzprofils 2 noch mit einem Profilabschlussmittel 12 abgedeckt wird. Das Fingerschutzprofil 2 und das Profilabschlussmittel 12 enden dann bündig an dem Element, an dem abgemessen wurde, beispielsweise an einem der Türbänder 16, 17.

## Patentansprüche

1. Vorrichtung (1) zum Führen eines Sägeblattes beim Sägen eines Fingerschutzprofils (2), zumindest umfassend ein Gehäuse (3), wobei das Gehäuse (3) durch zwei parallel zueinander verlaufende Stege (4, 5) und einen die Stege (4,5) verbindenden Boden (6) gebildet ist, wobei das Gehäuse (3) eine Ausnehmung (7) aufweist, mindestens ein Mittel (8, 9) zum Führen des Sägeblattes in einer vorbestimmten Position relativ zu einer Profilkante des Fingerschutzprofils (2), wobei das mindestens eine Mittel (8, 9) in den Stegen (4, 5) und dem Boden (6) angeordnet ist, **dadurch gekennzeichnet, dass** die Ausnehmung (7) geeignet und eingerichtet ist, das Fingerschutzprofil (2) einzuklemmen.

2. Vorrichtung (1) nach Anspruch 1, **dadurch gekennzeichnet, dass** das mindestens eine Mittel (8, 9) zum Führen des Sägeblattes im Zusammenspiel mit dem Gehäuse (3) einen vertikalen Sägewinkel von 90° in Bezug zu mindestens einer Profilkante einer Längsrichtung des Fingerschutzprofils (2) definiert.

3. Vorrichtung (1) nach Anspruch 1 oder 2, **dadurch gekennzeichnet, dass** die Vorrichtung (1) mindestens einen Adapter (10) umfasst, wobei der Adapter (10) eine Außenseite und eine Innenseite aufweist, wobei sie Außenseite geeignet und eingerichtet ist an oder in die Ausnehmung (7) eingebracht zu sein und wobei die Innenseite geeignet und eingerichtet ist ein zweites Fingerschutzprofil einzuklemmen.

4. Anordnung (11) zum Führen eines Sägeblattes beim Sägen eines Fingerschutzprofils (2), umfassend eine Vorrichtung (1) nach einem der vorhergehenden Ansprüche und zumindest ein Fingerschutzprofil (2) und ein Profilabschlussmittel (12), wobei das Profilabschlussmittel (12) geeignet und eingerichtet ist eine Stirnseite des Fingerschutzprofils (2) abzudecken.

5. Anordnung (11) nach Anspruch 4, **dadurch gekennzeichnet, dass** die Vorrichtung (1) an dem Fingerschutzprofil (2) verschiebbar ist.

6. Anordnung (11) nach Anspruch 4, **dadurch gekennzeichnet, dass** das Profilabschlussmittel (12) einen ersten Abschnitt und einen zweiten Abschnitt aufweist, wobei der erste Abschnitt geeignet und eingerichtet ist in oder an der Stirnseite des Fingerschutzprofils (2) befestigt zu sein und wobei der zweite Abschnitt eine Dicke aufweist, die im befestigten Zustand an dem Fingerschutzprofil (2) die Länge des Fingerschutzprofil um die Dicke verlängert.

7. Anordnung (11) nach einem der Ansprüche 4 bis 5, **dadurch gekennzeichnet, dass** das Gehäuse (3) eine Vorderseite (13) und eine Rückseite (14) aufweist, wobei das mindestens eine Mittel (8, 9) zum Führen des Sägeblattes von der Vorderseite (13) und/oder der Rückseite (14) in einer parallelen Ebene zu der Vorderseite (13) und/oder der Rückseite (14) mit einem Abstand in den Stegen (4, 5) und dem Boden (6) angeordnet ist, der der Dicke des Profilabschlussmittels (12) entspricht.

8. Anordnung (11) nach einem der Ansprüche 4 bis 7, **dadurch gekennzeichnet, dass** die Anordnung (11) ein Abschlussbauteil (15) aufweist, wobei das Abschlussbauteil (15) als spiegelsymmetrisches Profilabschlussmittel (12) ausgeführt ist, wobei das Abschlussbauteil (15) eine Sollbruchkante an der Symmetrieachse aufweist und jede Hälfte des Abschlussbauteils (15) geeignet und eingerichtet ist jeweils eine der gegenüberliegenden Stirnseiten des Fingerschutzprofils (2) abzudecken.

9. Anordnung (11) nach einem der Ansprüche 4 bis 6, **dadurch gekennzeichnet, dass** der Boden (6) der Vorrichtung (1) eine Höhe aufweist, die der halben Höhe des Abschlussbauteil (15) entspricht.

10. Tür aufweisend zumindest eine Anordnung (11) nach einem der vorhergehenden Ansprüche und mindestens ein Türband (16), wobei die Anordnung (11) geeignet und eingerichtet ist, den Abstand zwischen einem Untergrund oder einer Türzarge und dem mindestens einen Türband (16) oder zwischen zwei Türbändern (16, 17) abzunehmen.

11. Verfahren zum Führen eines Sägeblattes beim Sägen eines Fingerschutzprofils, wobei das Verfahren wenigstens die nachfolgenden Schritte umfasst:
- das Fingerschutzprofil wird in die Ausnehmung der Vorrichtung eingeklemmt,
- das Abschlussbauteil wird an einer Stirnseite des Fingerschutzprofils angebracht,
- das Fingerschutzprofil wird mit dem freien Ende des Abschlussbauteils an eine Seite des ersten Türbands oder an einen Untergrund oder an einer Türzarge gehalten,
- die Vorrichtung wird auf dem Fingerschutzprofil verschoben, bis die Vorrichtung an einem zweiten Türband oder einem Untergrund oder einer Türzarge anschlägt,
- das Sägeblatt einer Säge wird in das mindestens eine Mittel zum Führen eines Sägeblatts eingebracht
- das Fingerschutzprofil wird mittels Bewegung des Sägeblatts gekürzt.
